# EUROPEAN PATENT APPLICATION

(11) **EP 2 749 834 A2**
(43) Date of publication of application: **02.07.2014**
(21) Application number: 13199328.9
(22) Date of filing: 23.12.2013
(51) Int. Cl.: F41G 3/06, F41G 3/16

(54) **Heads up display for a gun scope of a small arms firearm**

(30) Priority: 19.12.2013 US 201314134917; 31.12.2012 US 201261747957 P
(71) Applicant: TrackingPoint, Inc., Pflugerville, TX 78660 (US)
(72) Inventor: McHale, John Francis, Austin, TX 78703 (US); Schauble, Jason Peter, Austin, TX 78758 (US); Brase, Kevin D., Leander, TX 78651 (US); Ansari, Marwan Yaqub, Austin, TX 78753 (US)
(74) Representative: Richardt Patentanwälte PartG mbB

(57) **Abstract**

A gun scope includes a display, an optical sensor to capture video data, a processor coupled to the display and the optical sensor, and a memory accessible to the processor. The memory is configured to store a heads up display module that, when executed, causes the processor to generate a heads up display (HUD) including a reticle and other data corresponding to an operating state of the gun scope. The HUD defines an arrangement of the other data. The processor provides the video data and the HUD to the display.

## Description

The present disclosure is generally related to digital heads up displays, and more particularly, to heads up displays for use within a gun scope of a small arms firearm, such as a rifle.

### BACKGROUND

Conventional gun scopes are glass optics that allow for various magnification levels and different levels of clarity when viewing a certain area. Additionally, conventional firearm optics may present a reticle superimposed at the center of the view area. In some instances, the reticle may be printed on at least one of the optical elements within the gun scope.

Digital firearm scopes may provide additional visual data that may be used to provide cues to a shooter for alignment of the firearm to a target, for example, based on data either provided by the optics or entered by the shooter, such as range and other data.

### SUMMARY

In an embodiment, a gun scope includes a display, an optical sensor to capture video data, a processor coupled to the display and the optical sensor, and a memory accessible to the processor. The memory is configured to store a heads up display module that, when executed, causes the processor to generate a heads up display (HUD) including a reticle and other data corresponding to an operating state of the gun scope. The HUD defines an arrangement of the other data. The processor provides the video data and the HUD to the display.

In another embodiment, a method includes receiving video data at a processor of a gun scope, receiving state data corresponding to an operating state of the gun scope, and generating a HUD using the processor. The HUD includes a reticle and the state data arranged according to a selected heads up display (HUD) software module of a plurality of HUD software modules. The method further includes providing at least a portion of the video data and the HUD to a display.

In still another embodiment, a gun scope includes one or more optical sensors configured to capture video data associated with a view area, sensors to capture orientation data corresponding to the gun scope, and a processor coupled to the display, the sensors, and the one or more optical sensors. The gun scope further includes a memory coupled to the processor and configured to store instructions that, when executed, cause the processor to generate a heads up display (HUD) including the orientation data and to provide the HUD and at least a portion of the video data to the display.

### BRIEF DESCRIPTION OF THE DRAWINGS

Fig. 1 is a block diagram of an embodiment of an optical device configured to provide a heads up display (HUD) according to an embodiment.
Fig. 2 is a perspective view of an optical device, such as the optical device of FIG. 1, configured to provide the HUD according to an embodiment.
Fig. 3 is a diagram of the HUD according to an embodiment.
Fig. 4 is a block diagram of a system including the optical device of Fig. 2 according to an embodiment.
Fig. 5 is a block diagram of a system including the optical device of Fig. 4 coupled to a firearm system according to an embodiment.
FIG. 6 is a flow diagram of a method of providing a HUD according to an embodiment.
FIG. 7 is a flow diagram of a method of providing a HUD according to a second embodiment.

In the following discussion, the same reference numbers are used in the various embodiments to indicate the same or similar elements.

### DETAILED DESCRIPTION OF ILLUSTRATIVE EMBODIMENTS

In the following detailed description of the embodiments, reference is made to the accompanying drawings which form a part hereof, and in which are shown by way of illustration of specific embodiments. It is to be understood that other embodiments may be utilized and structural changes may be made without departing from the scope of the present disclosure.

Described below are embodiments of an optical device, which may be implemented as a gun scope and which may be configured to provide a heads up display (HUD) to a display of the gun scope for presentation to a shooter. As used herein, the term "heads up display" or "HUD" refers to an arrangement of data presented to an electronic display, where the arrangement of data includes state data (such as instrument or sensor measurement data), which may be overlayed on or presented adjacent to a portion of the video data.

The optical device includes optical sensors, motion sensors, directional sensors, environmental sensors, range finder circuitry, and various other sensors coupled to a processor. The processor may be coupled to a memory configured to store instructions that, when executed, cause the processor to receive video data and other sensor data and to generate a graphical interface including the HUD and at least a portion of the video data. The HUD may include information from the various sensors as well as other information. In an embodiment, the HUD may include range data relative to a selected target, a communication status (wirelessly connected to a network access point or computing device), one or more environmental parameters (wind speed, barometric pressure, temperature, etc.), incline data, cant data, optics parameter data (zoom state, recording state, etc.), a date parameter, a time parameter, battery status, a location parameter (such as GPS coordinates), muzzle velocity, mode (or operating) state, or any combination thereof. The processor may provide the graphical interface including the HUD and a portion of the video data to a display within the optical device, and a shooter may view the HUD and the video data on a display of the optical device through a viewing lens.

In an example, the optical device may present the HUD according to a set of instructions stored within a memory of the optical device. The set of instructions define the arrangement and content of the data presented. The user may download other sets of instructions to provide different arrangements and/or combinations of the available information within the HUD on the display. Further, the user may interact with an interface of the optical device or an interface of a smart phone or other computing device configured to communicate with the optical device to configure one or more features of the HUD. In an embodiment, the user may interact with the interface to configure the HUD to hide particular information and/or to display selected information. Alternatively or in addition, the user may interact with the interface to adjust the size of the HUD within the graphical interface relative to the presentation of the video.

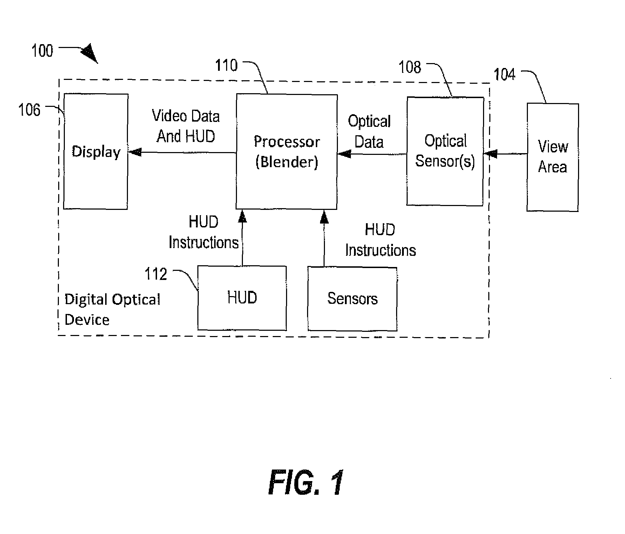

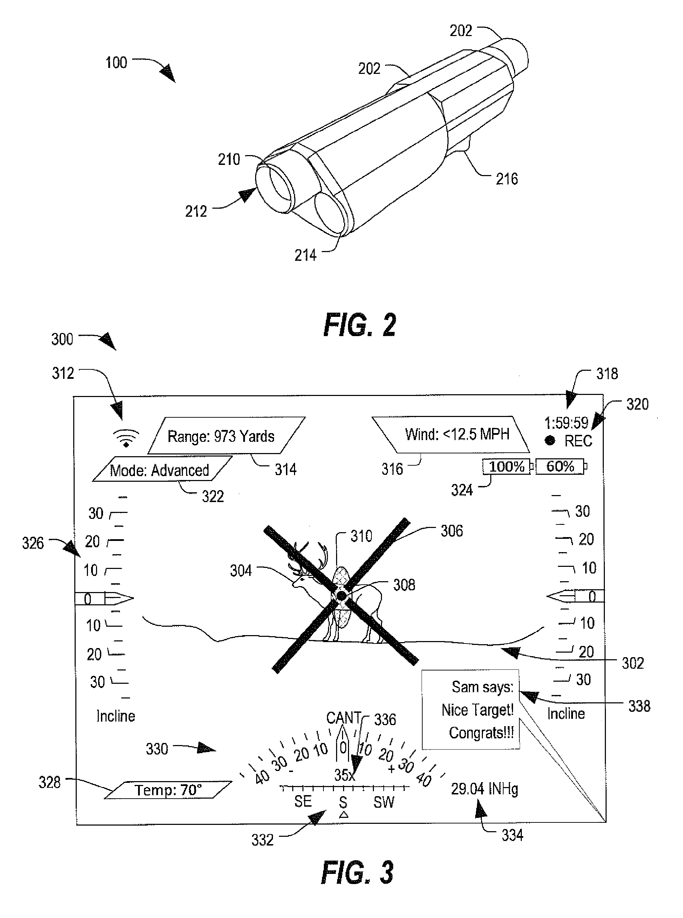

Fig. 1 is a block diagram of an embodiment of an optical device 100 according to an embodiment. Optical device 100 includes one or more optical sensors 108 configured to capture optical data corresponding to view area 104 and to provide the optical data to a processor (blender) 110, which receives HUD instructions associated with a HUD software module 112 stored in a memory and which receives other data from sensors 114. The processor 110 executes the HUD instructions to generate display information based on the data from the sensors (and other data) and provides the HUD and at least a portion of the optical data to a display 106. A user may view the display 106 through an eyepiece (such as eyepiece 202 in Fig. 2).

In an embodiment, HUD 112 may include a HUD software module executable by processor 110 to produce the HUD that is provided to display 106. Alternatively, HUD 112 may include a processor configured to execute the HUD software module to produce the HUD and may provide the generated HUD to processor 110, which may insert the other data from sensors 114 into the HUD. Since the HUD may be software generated, optical scope 100 allows for a customizable or programmable HUD that can be updated or reprogrammed and that can be configured by the user. One possible example of a digital optical scope 100 that may be used as a telescopic device, as one optical component of a pair of binoculars, or as a rifle scope is described below with respect to Fig. 2.

Fig. 2 is a perspective view of an optical device 100 configured to provide a HUD according to an embodiment. Optical device 100 may be implemented as a gun scope mounted to a small arms firearm, a portion of a binocular device, a telescopic device, or another type of optical device. Optical device 100 includes an eyepiece 202 coupled to a housing 204 that defines a cavity sized to secure optical sensors, orientation and direction sensors, environmental sensors, image processing circuitry and a display. The circuit may also include a memory coupled to the image processor and configured to generate a graphical interface including a HUD for presentation via the display, which is viewable by a user through eyepiece 202. Optical device 100 further includes a lens portion 210 that is configured to focus and direct light from a view area toward the optical sensors within housing 204. Optical device 100 may further include range finder circuitry including a first range finder element 212 configured to transmit a beam toward a selected target and including a second range finder element 214 configured to receive a reflected beam from the selected target, which reflected beam may be used to determine a range to a selected target. In another embodiment, the relative positions of the first and second range finder elements 212 and 214 may be reversed.

Optical device 100 may further include an input/output (I/O) interface 216 including one or more ports, interfaces or transceivers. One or more of the ports, interfaces, or transceivers may communicate with a computing device, such as smart phone or other computing device, through a wired or wireless communication link. Alternatively, one or more of the transceivers may communicate with a server through a communications network, such as a cellular, digital or satellite communications network and/or the Internet.

In an embodiment, image processing circuitry within optical device 100 may be configured to generate the HUD including state data captured by one or more sensors and circuits of optical device 100. In a particular example, the state data may be presented at peripheral edges or margins of the display overlaying at least a portion of the video data captured by the one or more optical sensors. One possible example of a HUD is described below with respect to Fig. 3.

Fig. 3 is a view of an embodiment of the HUD 300, which may be generated by the optical device 100 of Figs. 1 and 2. HUD 300 overlays a portion 302 of the displayed video, which is taken of the view area 104 of optical device 100 and which includes a target 304, with a reticle 306 superimposed on the target 304. In an example, reticle 306 may represent a center of the view area during a first operating phase prior to target selection and may represent a calculated ballistic solution reticle after the target is selected, the range to the target is determined, and the ballistic solution is determined.

In the illustrated example, a visual tag 308 is presented at the center of reticle 306. During a target selection process, the image processor of optical device 300 displays visual tag 308 at the center of the reticle 306. The user may align the reticle 306 to a location on target 304 within the view area 302 and interact with a button on the optical device 100 or on an associated firearm to release and apply the visual tag to a selected point on a target within the graphical interface. In an embodiment, the visual tag 308 and the reticle 306 may be part of the HUD 300. Upon application of the visual tag 308, optical device 100 may perform a range finding operation to determine a range to the selected target. In this example, the range finder beam is depicted as an ellipse 310, representing an example of the diffusion of the beam over the distance to the target. It should be appreciated that certain elements of the HUD 400 may be present or depicted only briefly, while others may be presented continuously. For example, the laser beam may be visually represented in the HUD as an ellipse 310 during the laser range finding operation and then may disappear. Further, some elements of the HUD 300 may be updated continuously, such as orientation data, while others may be updated periodically or in response to user input, such as battery status, recording data, and other data. Environmental parameters may be updated continuously, periodically, in response to a target selection operation, or according to some other schedule.

The HUD 300 further includes state information corresponding to various states or operating modes of optical device 100 or the small arms firearm to which the optical device 100 is attached. Further, the HUD 300 includes information corresponding to various measured parameters. In the illustrated embodiment, HUD 300 includes a wireless network connection indicator 312 indicating a connection status and a relative strength of a wireless signal. For example, if no wireless connection is available, the wireless network connection indicator 312 may be omitted or may be presented in a particular color, such as red. Additionally, the curved lines of the wireless network connection indicator 312 may be omitted to demonstrate the absence of the wireless connection. If the wireless connection is available and the device is connected to a wireless network (or to a computing device through a short-range wireless connection such as a Bluetooth® link), the wireless network connection indicator 312 may be presented in a particular color, such as green. Additionally, the relative strength may be indicated by the number of curved lines of the wireless network connection indicator 312.

The HUD 300 further includes a range indicator 314 to provide range data corresponding to the selected target, a wind indicator 316 to provide a wind speed and optionally a direction, a time indicator 318, a recording state indicator 320 indicating whether the portion 302 of the video data is being recorded, a mode indicator 322 indicating an operating mode of optical device 100, and a battery state indicator 324 indicating the remaining charge stored on one or more batteries within optical device 100. HUD 300 further includes an incline indicator 326, a temperature indicator 328, a cant indicator 330, a direction indicator 332, and a barometric pressure indicator 334. Additionally, HUD 300 includes a zoom level (state) indicator 336 indicating the zoom setting of the optical device 100.

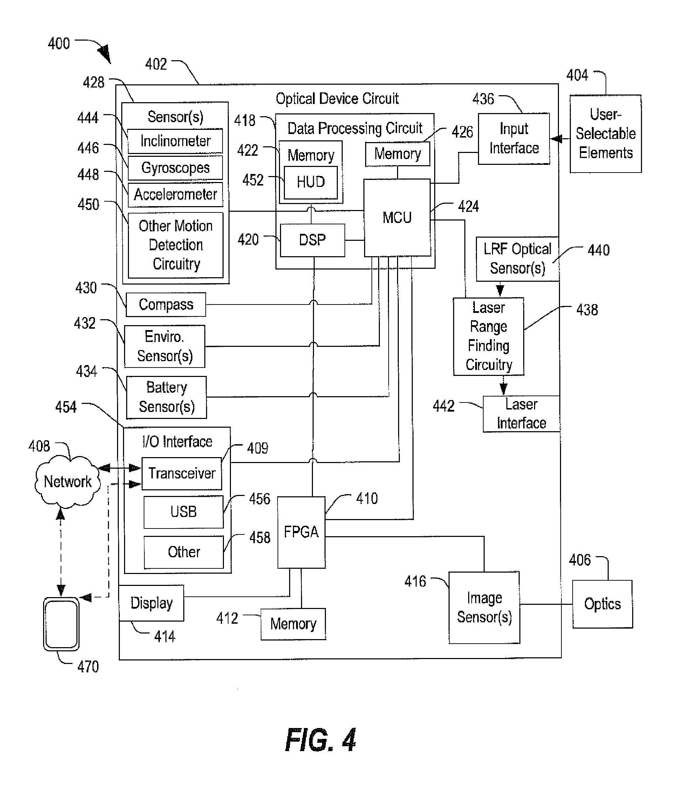

The HUD 300 may further include a callout, popup, message bubble, or other box (with or without borders), generally indicated at 338, that can include media content, such as a text message, an image, or other media content received from a computing device (such as computing device 470 in FIG. 4) or a communications network (such as network 408 in FIG. 4). In an example, optical device 100 may receive media content from one of the computing device 470 and the communications network 408 and may present the media content within an object of the HUD 300, such as the message bubble 338. In the illustrated example, a contact named "Sam" sent a message to the user saying "Nice Target! Congrats!!!", and computing device 370 communicated the message to optical device 100 through a communications link. In an example, video captured by the optical sensors within optical device 100 may be streamed to the network 408 through a wireless connection, either directly or through a computing device (such as a smart phone). Another individual may be able to view the video and may send a text message to the shooter, either through an application associated with the video streaming or through a simple messaging application. A processor of the optical device 100 may receive the message from the shooter's smart phone or from the network and may incorporate the message into the HUD 300. The processor may then provide the HUD 300 to a display of the optical device 100 together with a portion of the video data. Thus, HUD 300 may incorporate social media content as well as data collected from sensors.

In the illustrated embodiment of FIG. 3, HUD 300 presents the state information about the peripheral edges or margins overlaying the portion 302 of the view area 104. Other state information and other arrangements of the presentation of such information are also possible. In an embodiment, optical device 100 may communicate with a smart phone or other computing device to receive a HUD software module that can be stored within optical device 100 and executed by an associated processor to produce a different HUD including the same detailed information but presented differently or including different information presented in the same way or in a different way. In a particular example, the HUD 300 may present the data along the one side or the other, overlaying the portion 302 of the view area within the display. Other layouts are also possible. In an embodiment, a user may interact with the computing device to purchase and download a new HUD software module from a server (such as an application store for example) that can be provided to the optical device 100, that may be executed by a processor to generate a HUD having a different look and feel as compared to the HUD 100.

In another embodiment, the user may interact with a portable computing device, such as a smart phone, that is in wireless communication with optical device 100 to view the HUD and/or to interact with a touch-sensitive interface or other input interface of the computing device to selectively alter the arrangement of data within HUD 300. For example, the user may move range indicator 314 to a lower right quadrant of HUD 300 and may move other indicators to other peripheral portions, customizing HUD 300. For example, the user may change the size and/or position of the HUD, may alter the data displayed within the HUD, may alter other aspects of the HUD, or any combination thereof. Optical device 100 may store such customizations in a memory. Thus, HUD 300 represents just one possible example of a HUD, which may be customized by the user or replaced with a selected HUD software module.

Optical device 100 may be implemented as a digital optical device that includes one or more processors, a corresponding one or more memories, and an interface that may be used to interact with a computing device, such as a smart phone. One possible example of an implementation of optical device 100 is described below with respect to Fig. 4.

Fig. 4 is a block diagram of a system 400 including an embodiment of an optical device circuit 402 within optical device 100 of FIG. 2. System 400 includes userselectable elements 404, such as buttons on the optical device 100 or on an associated firearm. System 400 further includes optics 406 configured to direct and focus light toward image sensors 416 within circuit 402. Further, circuit 402 may be coupled to a network 408, such as the Internet, through a smart phone via a short-range wireless communication link (e.g., Bluetooth®) and a wireless network, such as a cellular, digital, or satellite communication network, or may be coupled to the network 408 through a wireless access point.

The circuit 402 includes a transceiver 409 configured to couple to the network 408, either directly or through another device, such as a smart phone or wireless access point. The transceiver 409 is also coupled to a microcontroller unit (MCU) 424 within a data processing circuit 418. The data processing circuit 418 includes a memory 426 associated with MCU 424 and includes a digital signal processor (DSP 420) and associated memory 422. The MCU 424 is coupled to a field programmable gate array (FPGA) 410 with an associated memory 412. The HUD instructions 452 may be stored in memory 422, or in memory 426 or 412.

The FPGA 410 is coupled to a display 414, which may be positioned adjacent to eyepiece 302 in FIG. 3. FPGA 410 is also coupled to image sensors 416, which may be positioned adjacent to optics 406 to receive the focused light. In an embodiment, FPGA 410 may record video data in memory 412 when it is operating in a recording mode.

MCU 424 is coupled to sensors 428, including one or more inclinometers 444, one or more gyroscopes 446, one or more accelerometers 448, and one or more other motion detection circuits 450. MCU 424 is further coupled to a directional component, such as compass 430, one or more environmental sensors 432 to determine temperature, barometric pressure, wind, and other environmental parameters, and one or more battery sensors 434 to determine a remaining charge on a battery power supply (not shown). MCU 424 is also coupled to one or more user-selectable elements 404 through an input interface 436. Further, MCU 424 is coupled to a range finder circuit, such as laser range finding (LRF) circuitry 438, which is coupled to a laser interface 442 for transmitting a beam and to LRF optical sensors 440 for receiving the reflected beam. In some instances, image sensors 416 may be used to receive the reflected beam.

In an embodiment, the transceiver 409 may be part of an input/output interface 454 that includes the USB port 456 and other communication and/or connection circuitry 458. The circuit 402 may communicate with a computing device 470, such as a smart phone, or with a memory card or other memory device, such as a USB thumb drive, using the USB port 456. The HUD instructions 452 may be upgraded or different HUD instructions may be received from network 408 via the transceiver 409 or from computing device 470 via the USB port 456 or via the transceiver 409, which different HUD instructions may replace, upgrade, or supplement the HUD instructions 452 in memory 422. Subsequently, the different HUD instructions may be executed by a processor, such as DSP 426 or MCU 424, to produce the HUD that is provided to the display 414.

In another embodiment, transceiver 409 may communicate bi-directionally with computing device 470 through network 408. In a particular embodiment, transceiver 409 is a wireless transceiver for communicating data to and receiving data from network 408, which may be a wide-area network (such as the Internet) and/or other communications network, such as a cellular, digital, or satellite communications network. In another embodiment, transceiver 409 may communicate bi-directionally with computing device 470 through a short-range communication link, such as a Bluetooth® communication link, and the computing device 470 may communicate with network 408, bridging the communication link between circuit 402 and network 408. In an embodiment, circuit 402 communicates with the network 408, directly, or through computing device 470 to retrieve a HUD software module and to store the HUD software module 452 in one of memory 422, 426, and 412 (in memory 422 in the illustrated example), depending on which of the DSP 420, MCU 424, and FPGA 410 will be executing the instructions to provide the HUD to display 414. Additionally, computing device 470 may also communicate media content to circuit 402 through transceiver 409, which media content may be incorporated into the HUD that is provided to display 414.

In the illustrated embodiment, DSP 420 executes HUD software module 452 to produce the HUD 300 and provides the HUD to FPGA 410 which combines the HUD with data from MCU 424, the video data, and other data received by FPGA 410 to produce a graphical interface including the HUD 300 and a portion of the video data for presentation on display 414. In an embodiment, transceiver 409 receives media content from computing device 470, which media content may include email, text, images, other media content and/or alerts and other information, and incorporates the social media content within the HUD provided to display 414.

While the example of Fig. 4 depicted some components of circuitry 402, at least some of the operations of circuitry 402 may be controlled using programmable instructions. In one instance, such instructions may be upgraded and/or replaced using transceiver 409. For example, a user may download a replacement HUD soft-ware module. In one embodiment, the replacement HUD software module may be downloaded to a portable storage device, such as a thumb drive, which may be coupled to the USB port 356, or computing device 470, which may be communicatively coupled to transceiver 409. The user may then select and execute the upgrade instructions by interacting with the user-selectable elements 404 or by interacting with user-selectable elements on a display interface of computing device 470.

In the above-examples, a programmable HUD 300 for an optical device 100 is described that can be programmed or otherwise modified by the user. The HUD 300 may be generated by a processor based on a HUD software module 352 or set of instructions, which module or instructions may be downloaded directly to a memory of the optical device 100 (such as memory 422 in Fig. 4) from a network 408 or that may be downloaded through an intermediary device, such as computing device 470.

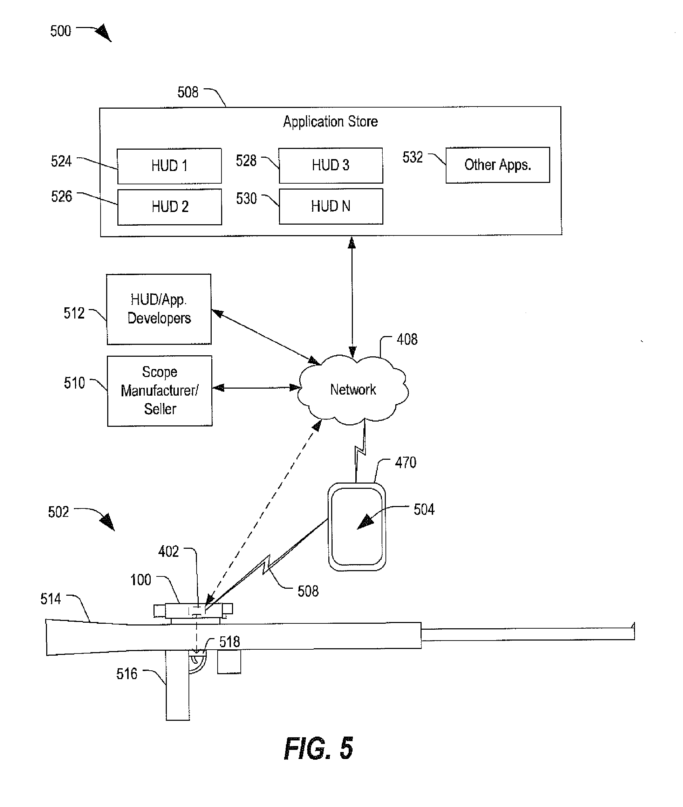

One possible example of a system including optical device 100 and computing device 470 is described below with respect to FIG. 5.

FIG. 5 is a block diagram of a system 500 including optical device 100 and including computing device 470 for downloading alternative HUD instructions and/or configuring the HUD 300. System 500 includes optical device 100 coupled to a firearm 514 to form a firearm system 502. Firearm 514 includes a handle or grip 516 and a trigger assembly 518 that may be communicatively coupled to the optical device circuit 402 (of Fig. 4). The optical device circuit 402 within optical device 100 includes a transceiver 409 that can communicate with a network 408 directly or through a short-range wireless link 508 and through computing device 470, which includes a touchscreen interface 504.

The system 500 further includes an application store 508, which may store a plurality of applications or software modules, which may be downloaded to the computing device 470 and/or to the optical device circuit 402. Scope manufacturer/sellers 510 and HUD/application developers 512 may also be coupled to application store 408 through network 408 to upload software modules, such as HUD software modules and other applications for computing devices, such as computing device 470, and for optical devices, such as optical device 100.

In the illustrated example, application store 508 includes a plurality of HUD software modules 524, 525, 528, and 530 (labeled "HUD 1", "HUD 2", "HUD 3" and "HUD 4") as well as other applications 532. HUD/application developers 512 and scope manufacturerlsellers 510 may generate new or upgraded HUD software modules and new applications (such as smart phone applications) and may upload them to application store 408 making them available for purchase and/or download.

In an embodiment, a user may select one of the HUD software modules, such as HUD software module 524, and may download and install it into a memory of circuit 402 within optical device 100. In an embodiment, the user may download the HUD software module 524 to computing device 470 and may transfer the HUD software module 524 to the optical device circuit 402 through a wired or wireless communication link 508 or via a memory card or flash drive. In another embodiment, the user may download the HUD software module 524 directly to the optical device circuit 402 through network 408 by interacting with touchscreen interface 504 or by interacting with user-selectable elements on optical device 100.

The downloaded HUD software module 524 may then be executed by a processor of optical device 100 to alter a HUD presented on a display 414 of optical device 100 or to present a new HUD corresponding to instructions in the HUD 524. In a particular example, a user may download a HUD software module that has a selected presentation of firearm-related data superimposed on or presented adjacent to the video data, such as the sensor, range, and other data in HUD 300 in Fig. 3.

In an alternative embodiment, the user may download an application that is executable on computing device 470 and that produces a graphical user interface on touchscreen 504. The user may interact with selectable elements on touchscreen 504 to alter the presentation of data on the display of optical device 100. In a particular example, the user may drag-and-drop elements of the HUD 300 (in Fig. 3) to rearrange the component elements to produce a selected layout and presentation, which layout and presentation may be presented on the touchscreen 404 and which may be communicated to optical device 100. In another example, the user may interact with one or more user-selectable elements of the touchscreen 504 to add or remove component elements from the HUD 300, which changes may be communicated to the optical device 100 to alter the presentation of the HUD 300 on the display 414 of the optical device 100. In a particular example, the user may turn off (disable) the zoom level (state) indicator 336 in Fig. 3 so that the HUD 300 no longer displays the zoom level. In another example, the user may selectively hide or expose various elements.

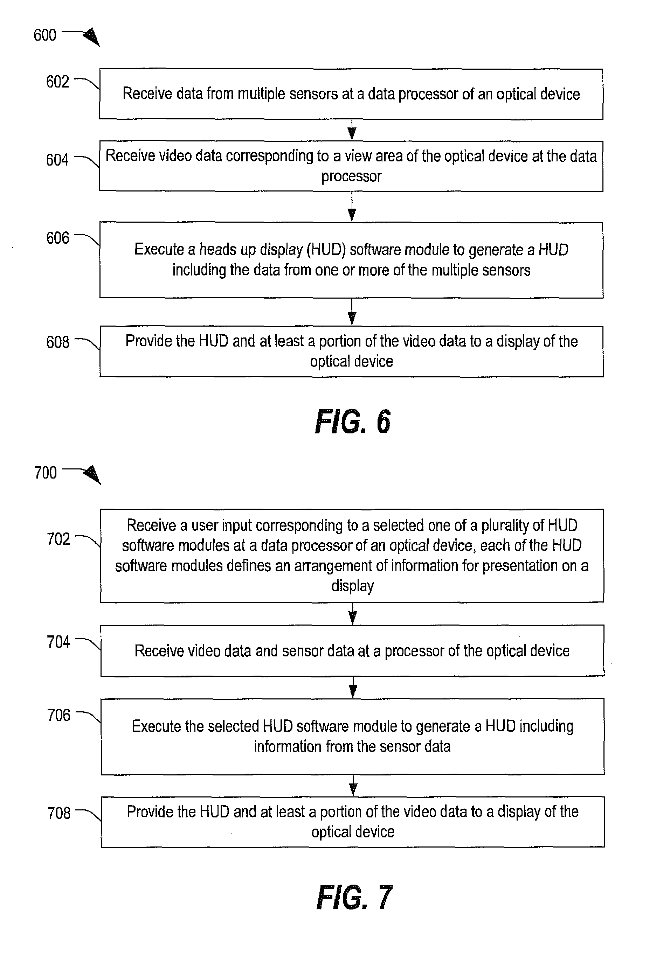

Fig. 6 is a flow diagram of an embodiment of a method 400 of providing a HUD. At 602, data is received from multiple sensors at a data processor of an optical device. The data may include range data corresponding to a selected target, environmental data (temperature, humidity, barometric pressure, wind direction, wind speed, and the like), state parameters (such as battery charge level, operating mode, time, video recording state, and the like), and orientation data (such as incline, cant, directional data, and the like).

Advancing to 604, video data is received at the data processor that corresponds to a view area of the optical device. The video data includes image data captured by image sensors 416. In an embodiment, social media data may also be received at the data processor, such as text messages and images, received from a network and/or from a computing device that is communicatively coupled to the optical device.

Continuing to 606, a HUD software module is executed to generate a HUD including the data from one or more of the multiple sensors. The HUD may include the data along one side or along peripheral edges of the HUD. Further, the HUD may be overlayed on or presented adjacent to the portion of the video data provided to a display. In a particular example, portions of the data within the HUD may be partially transparent, such that the user may view the data and still see the video data through the HUD. Additionally, other data, such as social media data, may be inserted into the HUD. In an example, a text pop up may be presented on the HUD 300.

Proceeding to 608, the HUD and at least a portion of the video data are provided to a display of the optical device. In an example, the HUD and the portion of the video data are presented on the display of optical device 100, and a user may view the HUD through eyepiece 302. Further, as discussed above, the user may interact with computing device 470 to modify or replace the HUD. One possible example of a method of altering the HUD is described below with respect to Fig. 7.

Fig. 7 is a flow diagram of an embodiment of a method 700 of providing a HUD according to a user selection. At 702, a user input is received that corresponds to a selected one of a plurality of HUD software modules at a data processor of an optical device. Each of the HUD software modules defines an arrangement of information for presentation on a display. In an example, the user input may be received at an interface of optical device 100 or at touchscreen interface 504 of computing device 470. Further, multiple HUD software modules may be stored in a memory of computing device 470 or in a memory of circuit 402, which HUD software modules may be selectable by a user.

Advancing to 704, video data and sensor data are received at a processor of the optical device. Continuing to 706, the selected HUD software module is executed by the processor to generate a HUD including information from the sensor data. Proceeding to 708, the HUD and at least a portion of the video data are provided to a display 414 of optical device 100 arranged according to the layout defined by the HUD software module and optionally defined by adjustments made by the user from a default layout of the HUD software module.

In an embodiment, the user may interact with touchscreen 504 or with user-selectable elements 404 to select one of a plurality of HUD software modules. In an embodiment, a memory of circuit 402 may store multiple HUD software modules. In another embodiment, the user may download one or more HUD software modules and may select one for execution to provide a selected HUD on display 414 of optical device 100. In a particular embodiment, the user may selectively alter the presentation of the HUD by interacting with a software module executing on computing device 470.

In conjunction with the systems and methods described above with respect to Figs. 1-7, an optical device 100 is described that includes a programmable HUD, which may be upgraded, replaced, or changed by a user. In one example, the user may download a HUD software module for installation on optical device 100, which may then execute the HUD software module to produce a HUD on a display of optical device 100. In another example, the user may interact with a computing device to alter the HUD on the display of optical device 100.

Although the present invention has been described with reference to preferred embodiments, workers skilled in the art will recognize that changes may be made in form and detail without departing from the scope of the invention.

## Claims

1. A gun scope comprising:
a display;
an optical sensor to capture video data;
a processor coupled to the display and the optical sensor; and
a memory accessible to the processor and configured to store a heads up display (HUD) module that, when executed, causes the processor to generate a HUD including a reticle and other data corresponding to an operating state of the gun scope, the HUD defining an arrangement of the other data, the processor to provide the video data and the HUD to the display.

2. The gun scope of claim 1, wherein the HUD presents the other data along peripheral edges of the display.

3. The gun scope of claim 1, further comprising:
an interface coupled to the processor and configured to receive a selected software module; and
wherein the processor is configured to execute the selected software module to provide a second HUD including a second reticle and the other data arranged according to the selected software module.

4. The gun scope of claim 3, wherein the interface comprises a radio frequency interface configured to communicate wirelessly with a computing device.

5. The gun scope of claim 4, wherein the other data includes a status of a communication link between the radio frequency interface and an external device.

6. The gun scope of claim 1, further comprising:
an interface coupled to the processor and configured to receive media content from one of a computing device and a network; and
wherein the processor is configured to incorporate the media content into the HUD.

7. The gun scope of claim 1, wherein:
the operating state comprises an operating mode of a plurality of operating modes including a video recording mode, a normal operating mode, a competition mode, and an advanced mode; and
a status indicator representative of the operating state is presented within the HUD.

8. The gun scope of claim 1, wherein the other data includes at least one of cant data corresponding to a cant of the gun scope, incline data corresponding to an incline of the gun scope, motion data corresponding to an orientation of the gun scope, and direction data corresponding to a direction of an aim point of the gun scope.

9. The gun scope of claim 8, further comprising:
an accelerometer circuit coupled to the processor to provide the motion data;
an inclinometer circuit coupled to the processor to provide the incline data;
a gyroscope circuit coupled to the processor to provide the cant data; and
one of a magnetometer and a compass circuit coupled to the processor to provide the direction data.

10. The gun scope of claim 1, further comprising:
a battery charge detector circuit; and
wherein the other data incudes a charge state of one or more batteries of the gun scope.

11. The gun scope of claim 1, further comprising:
a plurality of environmental sensors; and
wherein the other data includes at least one of a temperature, a wind speed, a wind direction, and a barometric pressure.

12. A gun scope comprising:
a display;
one or more optical sensors configured to capture video data associated with a view area;
sensors to capture orientation data corresponding to the gun scope;
a processor coupled to the display, the motion sensors, and the one or more optical sensors; and
a memory coupled to the processor and configured to store instructions that, when executed, cause the processor to generate a heads up display (HUD) including the orientation data and to provide the HUD and at least a portion of the video data to the display.

13. The gun scope of claim 12, further comprising a transceiver coupled to the processor and configured to communicate with one of a network and a computing device.

14. The gun scope of claim 13, wherein the memory further includes instructions that, when executed, cause the processor to receive data from the network and to present the data within the HUD.

15. The gun scope of claim 12, wherein:
the HUD includes a plurality of display elements; and
the memory further includes instructions that, when executed, cause the processor to receive instructions to generate a second HUD from one of the network and the computing device, the second HUD having at least one display element that differs from a corresponding one of the plurality of display elements of the HUD.
